# EUROPEAN PATENT SPECIFICATION

(11) **EP 3 835 694 B1**
(45) Date of publication and mention of the grant of the patent: **29.11.2023**
(21) Application number: 19860548.7
(22) Date of filing: 02.08.2019
(51) Int. Cl.: F25D 21/04, F25B 49/02, F25D 23/00, F25D 11/04

(54) **COOLING DEVICE**
KÜHLVORRICHTUNG
DISPOSITIF DE REFROIDISSEMENT

(30) Priority: 11.09.2018 JP 2018169505
(43) Date of publication of application: 16.06.2021
(73) Proprietor: PHC Holdings Corporation, Tokyo 105-8433 (JP)
(72) Inventor: NISHIMURA, Takumi, Toon-shi, Ehime 791-0395 (JP); SATO, Mitsugu, Toon-shi, Ehime 791-0395 (JP); SHIRATA, Mitsuyuki, Toon-shi, Ehime 791-0395 (JP)
(74) Representative: Grünecker Patent- und Rechtsanwälte PartG mbB
(86) International application number: PCT/JP2019/030578
(87) International publication number: WO 2020/054252

(56) References cited:
- EP-A1- 3 208 561
- JP-A- H01 234 777
- JP-A- 2004 085 102
- JP-A- 2016 044 875
- JP-A- 2016 044 875
- JP-A- 2016 070 571
- JP-A- 2018 004 121
- US-A1- 2014 208 783
- US-B2- 8 984 902

## Description

### Technical Field

The present invention relates to a cooling apparatus.

### Background Art

In a cooling apparatus exemplified by an ultra-low temperature freezer or a medical freezer, dew condensation is likely to occur in the vicinity of a packing disposed in the vicinity of the opening edge of a storage chamber.

Therefore, conventionally, a high-temperature refrigerant discharged from a compressor is supplied to a frame pipe disposed in the vicinity of the opening edge of the storage chamber, so as to heat the opening edge of the storage chamber to prevent dew condensation (e.g., see Patent Literature (hereinafter, referred to as "PTL") 1).

### Citation List

### Patent Literature

PTL 1
Japanese Patent Application Laid-Open No. 2016-070571
US 8 984 902 A relates to a cooling system for an appliance includes an evaporator stage, a compressor stage coupled to the evaporator stage and a condenser stage coupled to the compressor stage. Where condenser stage includes a condenser and a condenser cooling fan for cooling the condenser, and a condenser loop coupled between the condenser stage and the evaporator stage. A humidity sensor is configured to detect a humidity level in an area of the cooling system and a controller is configured to cycle an operating state of the condenser cooling fan from ON to a low speed or OFF prior to an end of a cooling cycle.
US 2014/208783 A1 relates to a refrigeration cycle system with a compressor, a condenser, an expansion device, and an evaporator through which a refrigerant sequentially passes. A blower fan sends air cooled by the evaporator to a freezer compartment and a refrigerator compartment. A damper regulates air sent from the evaporator to the refrigerator compartment, in which when the freezer compartment temperature is not satisfactory and the refrigerator compartment temperature is not satisfactory. The refrigerator operates in a concurrent operation mode in which the compressor is operated.
JP 2016044875 A relates to a refrigerator enabling dew condensation proof with low power consumption. The refrigerator includes a compressor, a heat radiation pipe increasing an ambient temperature by passing refrigerant compressed by the compressor. Further, temperature sensors detect an in-box temperature, and an operation control unit controls the compressor on the basis of detection temperatures in the temperature sensors. The refrigerator performs dew condensation prevention control with which a temperature of the heat radiation pipe is increased before stopping the compressor with the operation control unit.
EP 3208561 A relates to a heating, ventilation, and air conditioning (HVAC) system for regulating humidity of an enclosed space. The HVAC system includes an evaporator coil, a metering device and a variable-speed compressor. Responsive to a determination that the relative humidity of the enclosed space exceeds a maximum humidity threshold, a controller adjusts a speed of the variable-speed compressor to increase latent capacity of the HVAC system. Responsive to a determination that a relative humidity of the enclosed space falls below a minimum humidity threshold, the controller adjusts a speed of the variable-speed compressor to decrease latent capacity of the HVAC system.

### Summary of Invention

### Technical Problem

When a compressor of the same specifications is used in common for cooling apparatuses of different specifications for the purpose of reducing the manufacturing cost or the like, the performance of the compressor may be high relative to the cooling performance of a cooling apparatus whose required cooling performance is low because of a small storage chamber or the like.

In such a case, even when the compressor is operated at the minimum output, the temperature of the storage chamber (hereinafter referred to as "in-container temperature") becomes less than a threshold on a low temperature side. Accordingly, when the in-container temperature is less than the threshold on the low temperature side, the operation of the compressor is temporarily stopped, and then, when the in-container temperature exceeds a threshold on a high temperature side, the operation of the compressor is restarted.

However, since it is impossible to supply a high-temperature refrigerant to the frame pipe during the period in which the operation of the compressor is stopped, it is impossible to heat the opening edge of the storage chamber using the frame pipe and is thus impossible to prevent the occurrence of dew condensation in this period.

Moreover, the compressor consumes a larger energy at the start than during operation. In such a mode of operation as described above, the start and stop of the compressor are repeated alternately, and the energy consumption is increased accordingly.

The present invention is devised to solve such a problem, and aims to provide a cooling apparatus capable of preventing the occurrence of dew condensation steadily and reducing energy consumption.

### Solution to Problem

To solve the above conventional problem, a cooling apparatus of the present invention includes: a storage container including an opening; a door configured to open and close the opening; and a cooling unit that cools an inside of the storage container. The cooling unit includes a compressor, a condenser, a blowing device that sends air to the condenser and the compressor, and a frame pipe. The frame pipe is disposed in a vicinity of the opening, and a refrigerant discharged from the compressor flows through the frame pipe before reaching the condenser. In a state where neither a start nor a stop of the compressor is performed, a blowing amount of the blowing apparatus is increased for a period in which an in-container temperature that is a temperature inside the storage container exceeds a predetermined upper limit value, and the blowing amount of the blowing apparatus is reduced for a period in which the in-container temperature falls below a predetermined lower limit value.

### Advantageous Effects of Invention

According to the present invention, it is possible to prevent the occurrence of dew condensation steadily and to reduce the energy consumption.

### Brief Description of Drawings

FIG. 1 is a perspective view illustrating an overall configuration of an ultra-low temperature freezer;
FIG. 2 is schematic plan view illustrating an internal configuration of a mechanical room;
FIG. 3 illustrates a refrigerant circuit of a cooling unit;
FIG. 4 illustrates functional blocks of a controller of the cooling unit;
FIG. 5 illustrates an example of a compressor control and a fan control of the controller of the cooling unit;
FIG. 6 is a graph in which the horizontal axis represents an elapsed time after the power of the cooling apparatus is turned on and the vertical axis represents the in-container temperature; and
FIG. 7 illustrates an example of the compressor control and the fan control of the controller of the cooling unit.

### Description of Embodiments

Hereinafter, a cooling apparatus according to an embodiment of the present invention will be described with reference to the accompanying drawings.

A description will be given of each of the following embodiments in relation to an example in which the cooling apparatus of the present invention is applied to an ultra-low temperature freezer. Note that, the term "cooling apparatus" expresses a concept including a freezing apparatus, a refrigerating apparatus, an ultra-low temperature freezer, and those which have these functions in combination. The ultra-low temperature freezer cools the inside of a storage chamber to an ultra-low temperature (e.g., about -80°C), and is used for preservation of, for example, a frozen food, biological tissue, specimen, or the like at an ultra-low temperature.

The side of the ultra-low temperature freezer which a user faces during usage of the ultra-low-temperature freezer (the side with a door for opening and closing the opening of a storage container) is referred to as "front" and the side opposite to the front is referred to as "rear." In addition, the left and right are defined with reference to the case of viewing from the front to the rear.

Note that, in all the figures for explaining the embodiments, the same elements are denoted by the same reference numerals in principle, and the description thereof may be omitted.

### [1. Embodiment 1]

### [1-1. Configuration]

### [1-1-1. Overall Configuration]

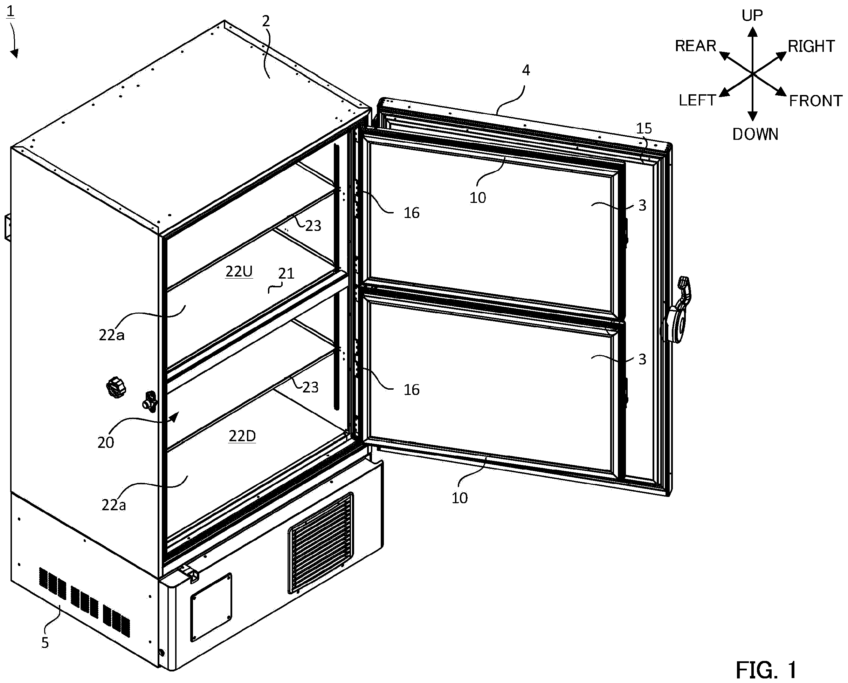

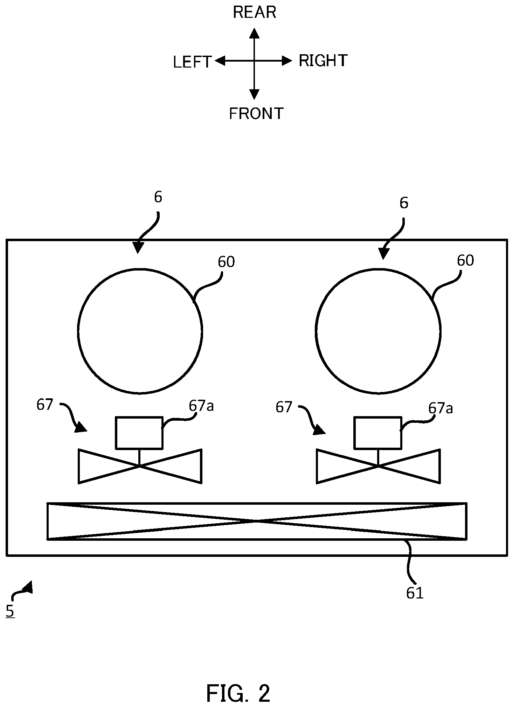

Hereinafter, an overall configuration of the ultra-low temperature freezer of Embodiment 1 of the present invention will be described in detail with reference to FIGS. 1 and 2. FIG. 1 is a perspective view illustrating the overall configuration the ultra-low temperature freezer. FIG. 2 is a schematic plan view illustrating an internal configuration of a mechanical room.

Ultra-low temperature freezer 1 includes storage container 2, inner doors 3, outer door 4, and mechanical room 5 as illustrated in FIG. 1.

Storage container 2 is a housing having storage chamber 20 that opens forward. Storage chamber 20 is a space in which a preservation target is housed.

Storage chamber 20 is divided by partition wall 21 into two storage chambers (internal spaces) 22U and 22D arranged one above the other. Hereinafter, upper storage chamber 22U is also referred to as "upper chamber" and lower storage chamber 22D is also referred to as "lower chamber." When upper chamber 22U and lower chamber 22D are not distinguished from each other, they are referred to as storage chambers 22. Note that, each of storage chambers 22 is further divided into two upper and lower sections by partition wall 23.

Inner doors 3 are provided respectively for storage chambers 22, and are provided in two upper and lower stages in storage container 2. The right edges of inner doors 3 are fixed to the front right edge of storage container 2 by a plurality of hinges 16 arranged above one another. Outer door 4 is fixed to the front right edge of storage container 2 on the outer side (i.e., right side) of inner doors 3 by a plurality of hinges (not illustrated) disposed above one another.

With such a configuration, openings 22a of storage chambers 22 are opened and closed by inner doors 3 and outer door 4.

Packings 10 are disposed over the entire circumferences of the peripheral edges of the inner wall surfaces of inner doors 3. Similarly, packing 15 is disposed over the entire circumference of the peripheral edge of the inner wall surface of outer door 4. By disposing packings 10 and 15, the adhesion between, on the one hand, inner doors 3 and outer door 4 and, on the other hand, storage container 2 at the time when inner doors 3 and outer door 4 are closed is improved, and the airtightness of storage chambers 22 is improved.

In the present embodiment, mechanical room 5 is disposed below storage container 2, and principal parts of cooling units 6 for cooling storage chambers 22 are stored as illustrated in FIG. 2. Specifically, one condenser 61 is disposed in the front row over substantially the entire width, two fans 67 (blowing devices) are disposed in the central row side by side on the left and right, and two compressors 60 are disposed in the rear row side by side on the left and right. Note that, illustration of a refrigerant pipe is omitted in FIG. 2.

In mechanical room 5, compressor 60 and fan 67 disposed on the right side are used to cool upper chamber 22U (they may also be used to cool lower chamber 22D), and compressor 60 and fan 67 disposed on the left side are used to cool lower chamber 22D. Condenser 61 is used for cooling both of upper chamber 22U and lower chamber 22D (it may also be used for cooling upper chamber 22U). That is, cooling unit 6 for upper chamber 22U is installed mainly on the right side, and cooling unit 6 for lower chamber 22D is installed mainly on the left side in mechanical room 5.

Each of compressors 60 is a direct-current electric compressor in which an alternating-current power source is used as a power source, and the compressor includes a drive electric motor and an inverter for controlling the number of rotations of this electric motor (illustration of both of the electric motor and the inverter is omitted). An alternating-current power source is used as a power source for each of fans 67, and the fan includes direct-current electric motor 67a for driving the fan (hereinafter referred to as "fan motor").

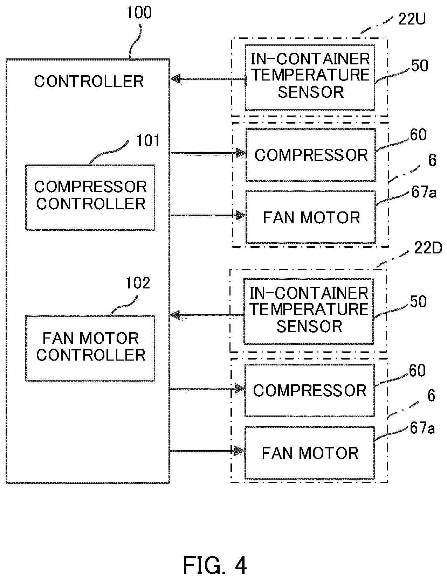

Further, ultra-low temperature freezer 1 is provided with controller 100 in cooling units 6, which is not illustrated in FIGS. 1 and 2. In addition, in-container temperature sensor 50 for detecting the temperature in the chamber (hereinafter, referred to as "in-container temperature") is disposed in each of upper chamber 22U and lower chamber 22D (see FIG. 4 for controller 100 and in-container temperature sensors 50).

### [1-1-2. Configuration of Cooling Unit]

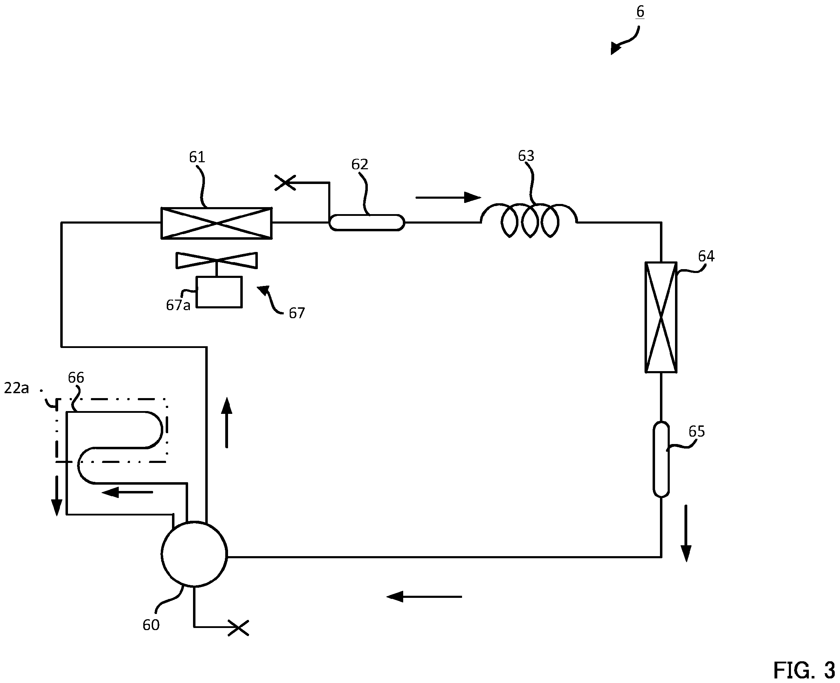

Hereinafter, the configuration of each of the cooling units according to Embodiment 1 of the present invention will be further described with reference to FIG. 3. FIG. 3 illustrates a refrigerant circuit of the cooling unit. Note that, the arrows in FIG. 3 illustrate the directions of flow of a refrigerant.

Cooling unit 6 includes compressor 60, condenser 61, dehydrator 62, capillary tube 63, evaporator 64, and header 65, and these components are connected annularly by a refrigerant pipe in this order. Cooling unit 6 further includes below-described frame pipe 66, and above-described fan 67 for supplying air to condenser 61. Note that, dehydrator 62 and capillary tube 63 are disposed in mechanical room 5; however, both of them are not illustrated in FIG. 2.

A high-temperature refrigerant compressed by compressor 60 is once discharged to frame pipe 66. Frame pipe 66 is disposed in the vicinity of opening 22a of upper chamber 22U or lower chamber 22D, and opening 22a is heated to prevent dew condensation. Note that, frame pipe 66 is not illustrated in FIG. 1.

The refrigerant passing through frame pipe 66 returns to compressor 60 (note that the refrigerant may not return to compressor 60), flows to condenser 61, and dissipates heat by heat exchange with the air supplied to condenser 61 by fan 67 by the operation of fan motor 67a. After the moisture of the refrigerant having passed condenser 61 is removed by dehydrator 62, the refrigerant expands when passing capillary tube 63, flows to evaporator 64, and is vaporized. Evaporator 64 is disposed in upper chamber 22U or lower chamber 22D, and the refrigerant vaporized by evaporator 64 cools upper chamber 22U or lower chamber 22D. The refrigerant having passed evaporator 64 returns to compressor 60 via header 65. Note that, fan 67 supplies (i.e., blows), to compressor 60, the air that the fan supplied to condenser 61, that is, fan 67 blows compressor 60. Thus, fan 67 cools not only condenser 61 but also compressor 60.

### [1-2. Control]

Hereinafter, the control of each of the cooling units according to Example 1 not part of the claimed invention will be described in detail with reference to FIGS. 4 to 6.

To begin with, a functional configuration of the controller of the cooling unit will be described with reference to FIG. 4. FIG. 4 illustrates functional blocks of the controller of the cooling unit.

As illustrated in FIG. 4, single controller 100 is provided for two cooling units 6 including cooling unit 6 for upper chamber 22U and cooling unit 6 for lower chamber 22D. Controller 100 includes, as functions, compressor controller 101 and fan motor controller 102.

Compressor controller 101 controls the operation of compressor 60 for each of storage chambers 22 such that in-container temperature T substantially falls within a predetermined temperature range. Specifically, compressor controller 101 stops compressor 60 when in-container temperature T detected by in-container temperature sensor 50 is lower than low temperature threshold TMIN (T < TMIN), and operates compressor 60 when in-container temperature T is higher than high temperature threshold TMAX (T > TMAX). Thus, in-container temperature T is controlled to substantially fall within the predetermined temperature range between low temperature threshold TMIN and high temperature threshold TMAX (in-container temperature control range).

Further, compressor controller 101 controls compressor 60 (specifically, the frequency of the inverter; thus the rotation speed of the electric motor) such that output (hereinafter referred to as "compressor output") Pc is continuously raised with increasing in-container temperature T or is raised with increasing in-container temperature T in a stepwise manner. In addition, compressor controller 101 operates compressor 60 at a higher output to rapidly cool storage chamber 22 immediately after the power of ultra-low temperature freezer 1 is turned on.

Fan motor controller 102 lowers the output of fan motor 67a (hereinafter referred to as "fan motor output") Pf (specifically, by controlling the frequency of the inverter) as in-container temperature T decreases. That is, the blowing amount of fan 67 is reduced as in-container temperature T decreases.

Specifically, fan motor controller 102 sets fan motor output Pf to initial output Pf1 when compressor 60 starts operating. Then, fan motor controller 102 continuously lowers fan motor output Pf from initial output Pf1 as in-container temperature T decreases or lowers fan motor output Pf in a stepwise manner from initial output Pf1 as in-container temperature T decreases. Further, fan motor controller 102 sets fan motor output Pf to initial output Pf1 again when compressor 60 restarts operation after stopping temporarily. Note that, fan motor controller 102 may continuously increase fan motor output Pf as in-container temperature T increases or increase fan motor output Pf in a stepwise manner as in-container temperature T increases.

Note that, fan motor controller 102 may lower the fan motor output to reduce the blowing amount of fan 67 as elapsed time tc after compressor 60 starts operating increases. Specifically, fan motor controller 102 is configured to have a timer function, and elapsed time tc after compressor 60 starts operating is counted using this timer function. Then, fan motor output Pf is lowered as elapsed time tc increases.

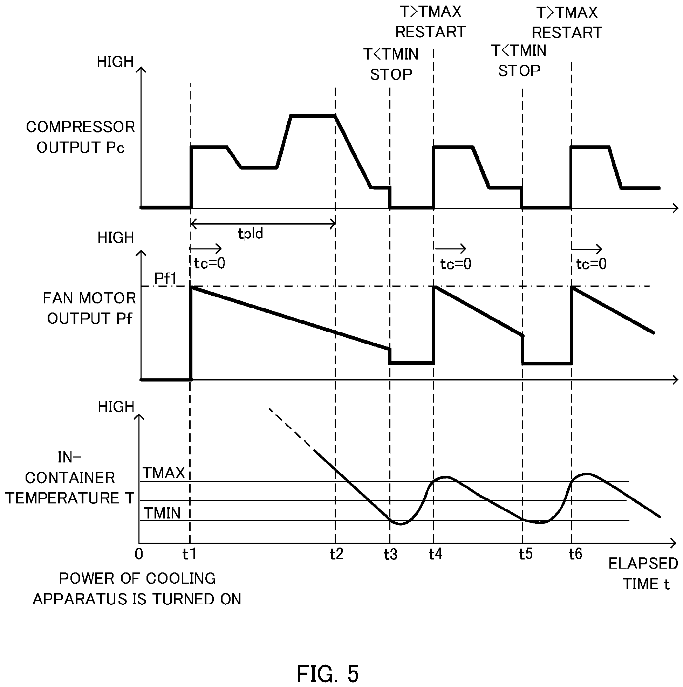

More specifically, fan motor controller 102 sets fan motor output Pf to initial output Pf1 when compressor 60 starts operating. Then, fan motor controller 102 continuously lowers fan motor output Pf from initial output Pf1 or lowers fan motor output Pf from initial output Pf1 in a stepwise manner as elapsed time tc (see FIG. 5) after compressor 60 starts operating increases. Further, when compressor 60 restarts the operation after stopping temporarily, fan motor controller 102 restarts the counting of elapsed time tc after resetting elapsed time tc and sets fan motor output Pf to initial output Pf1 again.

An example of a compressor control and a fan control of controller 100 will be described with reference to FIG. 5. FIG. 5 illustrates an example of the compressor control and the fan motor control of the controller of the cooling unit. Specifically, in FIG. 5, elapsed time t after the power of cooling apparatus 1 is turned on is represented by a common horizontal axis, and a graph in which the vertical axis represents compressor output Pc, a graph in which the vertical axis represents fan motor output Pf, and a graph in which the vertical axis represents in-container temperature T are illustrated in this order from above.

As illustrated in FIG. 5, during period tpld between elapsed times t1 to t2 shortly after the power of cooling apparatus 1 is turned on, compressor controller 101 controls the output of compressor 60 at a higher output to rapidly cool storage chamber 22 as described above. Fan motor controller 102 starts the operation of fan motor 67a at initial output Pf1 to start the blowing by fan 67 when the operation of compressor 60 is started at elapsed time 11. Thereafter, fan motor controller 102 lowers fan motor output Pf according to a decrease in in-container temperature T.

Then, compressor controller 101 stops compressor 60 temporarily at elapsed time t3 since in-container temperature T falls below low temperature threshold TMIN. In addition, at the same time as the temporary stop of compressor 60, fan motor output Pf may be lowered at once to a predetermined value, or fan 67 may be stopped by lowering fan motor output Pf to 0.That is, the blowing amount of fan 67 to compressor 60 is reduced or the fan is stopped. It is thus possible to maintain the temperature of the refrigerant in frame pipe 66 at a higher temperature, so as to further suppress dew condensation at opening 22a of storage chamber 20. Thereafter, in-container temperature T increases due to the stop of compressor 60, i.e., the stop of cooling unit 6. When in-container temperature T exceeds high-temperature threshold TMAX at elapsed time t4, compressor controller 101 restarts the operation of compressor 60, and fan motor controller 102 raises fan motor output Pf to initial output Pf1.

Then, according to the decrease in in-container temperature T, compressor controller 101 lowers compressor output Pc in a stepwise manner, and fan motor controller 102 lowers fan motor output Pf. Thereafter, when in-container temperature T falls below low temperature threshold TMIN at elapsed time t5, compressor controller 101 stops compressor 60 temporarily. In addition, at the same time as the temporary stop of compressor 60, fan motor output Pf may be lowered at once to a predetermined value, or fan 67 may be stopped by lowering fan motor output Pf to 0. Thereafter, when in-container temperature T exceeds high temperature threshold TMAX at elapsed time t6, compressor controller 101 restarts the operation of compressor 60, and fan motor controller 102 raises fan motor output Pf to initial output Pf1.

### [1-3. Effects]

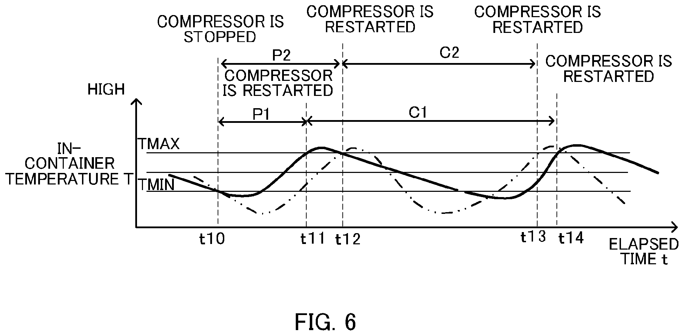

The effects of Example 1 not part of the claimed invention will be described with reference to FIG. 6. FIG. 6 illustrates a graph in which the horizontal axis represents elapsed time t after the power of cooling apparatus 1 is turned on and the vertical axis represents in-container temperature T, which shows an example of the changes in the in-container temperatures of ultra-low temperature freezer 1 of the present embodiment and of the conventional ultra-low temperature freezer. In FIG. 6, the in-container temperature of ultra-low temperature freezer 1 of the present example is illustrated by a solid line, and the in-container temperature of the conventional ultra-low temperature freezer is illustrated by a two-dot chain line. The conventional ultra-low temperature freezer as referred to herein is a freezer with constant fan motor output Pf regardless of elapsed time t.

In FIG. 6, for ease of comparison between in-container temperatures T of ultra-low temperature freezer 1 of the present example and of the conventional ultra-low temperature freezer, in-container temperatures T of both of ultra-low temperature freezer 1 and the conventional ultra-low temperature freezer fall below low temperature threshold TMIN at elapsed time t10. In-container temperature T gradually decreases after the operation of compressor 60 is restarted (started), and fan motor output Pf is lowered gradually according to the decrease in in-container temperature T. Accordingly, the degree to which compressor 60 is cooled by the blowing of fan 67 also gradually decreases after the operation of compressor 60 is restarted (started). When the degree to which compressor 60 is cooled decreases, the temperature of the refrigerant flowing through compressor 60 becomes relatively high, and accordingly, the specific gravity of the refrigerant becomes smaller so that the refrigerant discharge amount by compressor 60 is reduced.

Consequently, the performance of compressor 60 and thus the cooling performance of cooling units 6 are lowered, and the decreasing rate of in-container temperature T is thus lower than that in the conventional ultra-low temperature freezer with constant fan motor output Pf. Further, the temperature of the refrigerant of ultra-low temperature freezer 1 becomes higher than the temperature of the refrigerant of the conventional ultra-low temperature freezer. That is, the cold storage capacity of cooling unit 6 is reduced.

Therefore, the period from elapsed time t10 at which in-container temperature T falls below low temperature threshold TMIN and compressor 60 is stopped to the time at which in-container temperature T increases to high temperature threshold TMAX and compressor 60 is restarted, in other words, stop period P1 of compressor 60 (= elapsed time t11 - elapsed time t10) is shorter than stop period P2 (= elapsed time t12 - elapsed time t10) of the compressor of the conventional ultra-low temperature freezer.

It is thus possible to shorten the period during which it is impossible to supply a high-temperature refrigerant from compressor 60 to frame pipe 66, i.e., the period during which it is impossible to sufficiently suppress dew condensation at opening 22a of storage container 2, which is also the period during which the temperature of frame pipe 66 decreases. Therefore, according to ultra-low temperature freezer 1 of the present example, it is possible to steadily prevent the occurrence of dew condensation.

Further, as described above, the decreasing rate of in-container temperature T during operation of compressor 60 is lower than in the conventional freezer. Therefore, the period until in-container temperature T falls below low temperature threshold TMIN after compressor 60 is restarted becomes longer. Accordingly, period C1 until in-container temperature T exceeds high temperature threshold TMAX and compressor 60 is restarted after the compressor is previously restarted (= elapsed time t14 - elapsed time t11) is longer than similar period C2 for the conventional ultra-low temperature freezer (= elapsed time t13 - elapsed time t12). That is, the cycle of starting compressor 60 can be longer than in the conventional freezer, and it is possible to reduce the energy consumption due to the start of compressor 60.

Further, it is possible to constrain the temperature (= TMIN - T) by which in-container temperature T is lower than low temperature threshold TMIN and the period during which in-container temperature T is lower than low temperature threshold TMIN.

### [2. Embodiment 2]

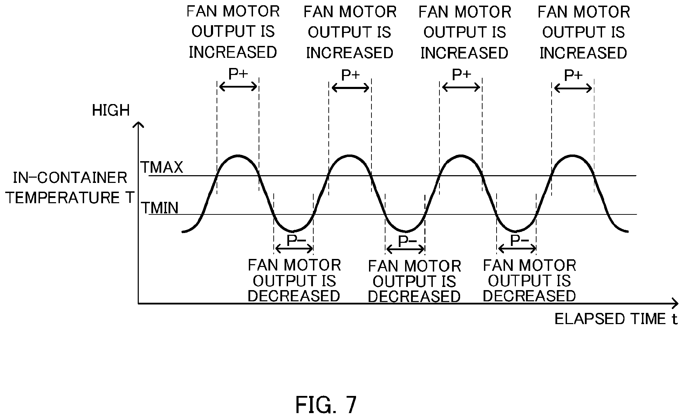

Hereinafter, the control of each of the cooling units according to Embodiment 2 of the present invention will be described in detail with reference to FIGS. 4 and 7. FIG. 7 illustrates an example of the compressor control and the fan control of the controller of the cooling unit.

The cooling unit according to Embodiment 2 is different from the cooling unit according to Embodiment 1 only in the compressor control and the fan control, and therefore, a description will be given only of the compressor control and the fan control.

Like Example 1, controller 100 is configured as illustrated in FIG. 4, and includes compressor controller 101 and fan motor controller 102. Unlike Example 1, compressor controller 101 controls compressor output Pc at a constant output. Fan motor controller 102 lowers fan motor output Pf continuously or in a stepwise manner with decreasing in-container temperature T detected by in-container temperature sensor 50.

In the present embodiment, fan motor controller 102 controls fan motor output Pf as illustrated in FIG. 7. That is, fan motor controller 102 increases fan motor output Pf by accelerating the rotation speed of fan motor 67a for period P+ in which in-container temperature T exceeds high temperature threshold TMAX. On the other hand, fan motor output Pf is lowered by decelerating the rotation speed of fan motor 67a for period P- in which in-container temperature T is lower than low temperature threshold TMIN.

As is understood, when in-container temperature T is lower than low temperature threshold TMIN, fan motor output Pf is lowered to reduce the performance of compressor output Pc and the heat dissipation of condenser 61 so as to lower the output of cooling unit 6. In addition, when in-container temperature T is higher than high temperature threshold TMAX, fan motor output Pf is increased to increase the performance of compressor output Pc and the heat dissipation of condenser 61 so as to increase the output of cooling unit 6. Consequently, in-container temperature T can be substantially kept within the predetermined temperature range.

Note that, in a case where in-container temperature T is kept between low-temperature threshold TMIN and high-temperature threshold TMAX, fan motor controller 102 may be configured to lower fan motor output Pf more as in-container temperature T is lower. Further, fan motor controller 102 may be configured to temporarily stop fan 67 when in-container temperature T falls below low temperature threshold TMIN, and then restart fan 67 when in-container temperature T exceeds high temperature threshold TMAX.

According to the cooling apparatus of Embodiment 2 of the present invention, the same effect as Example 1 is obtainable, and additionally, it is possible to reduce stress on compressor 60 caused at the time of start, so as to make the life of compressor 60 longer than that in Example 1 since the start and stop of compressor 60 are not repeated. It is also possible to reduce stress on fan motor 67a caused at the time of start, so as to make the life of fan motor 67a longer than that in Example 1 since the start and stop of fan motor 67a also are not repeated.

### [3. Others]

(1) Although the present invention is applied to the cooling apparatus in which compressors 60 are provided for cooling respective storage chambers 22 in the above embodiments, the present invention can also be applied to a type of cooling apparatus in which two compressors are provided for cooling one storage chamber.
(2) Although the present invention is applied to the cooling apparatus configured to include inner doors 3 and outer door 4 at the front in the above embodiments, the present invention is not limited to this application to the cooling apparatus having such a configuration. For example, the present invention is applicable to a cooling apparatus provided with an outer door for a front upper stage of the storage container and an outer door for a front lower stage of the storage container, i.e., a cooling apparatus provided with two stages of upper and lower outer doors on the front of the storage container. The present invention can also be applied to a cooling apparatus provided with a door like an upper lid for opening and closing an opening of a storage container that opens upward.

### Industrial Applicability

According to the present invention, it is possible to prevent the occurrence of dew condensation steadily and to reduce the energy consumption in a cooling apparatus. Therefore, its industrial applicability is enormous.

### Reference Signs List

1 Ultra-low temperature freezer (cooling apparatus)
2 Storage container
3 Inner door
4 Outer door
5 Mechanical room
6 Cooling unit
10, 15 Packing
16 Hinge
20 Storage chamber
21 Partition wall
22 Storage chamber (internal space)
22a Opening
22U Upper chamber
22D Lower chamber
23 Partition wall
50 In-container temperature sensor
60 Compressor
61 Condenser
62 Dehydrator
63 Capillary tube
64 Evaporator
65 Header
66 Frame pipe
67 Fan (blowing device)
67a Direct-current electric motor (fan motor)
100 Controller
101 Compressor controller
102 Fan motor controller

## Claims

1. A cooling apparatus (1), comprising:
a storage container (2) comprising an opening (22a);
a door (4) configured to open and close the opening (22a); and
a cooling unit (6) that cools an inside of the storage container (2), wherein
the cooling unit (6) comprises:
a compressor (60);
a condenser (61);
a blowing device (67) that sends air to the condenser (61) and the compressor (60); and
a frame pipe (66) that is disposed in a vicinity of the opening (22a), and through which a refrigerant discharged from the compressor (60) flows before reaching the condenser (61), **characterized in that**
in a state where neither a start nor a stop of the compressor (60) is performed, a blowing amount of the blowing device (67) is increased for a period in which an in-container temperature that is a temperature inside the storage container (2) exceeds a predetermined upper limit value, and the blowing amount of the blowing device (67) is reduced for a period in which the in-container temperature falls below a predetermined lower limit value.

2. The cooling apparatus (1) according to claim 1, wherein
an output of the compressor (60) is set to a constant output, and
the lower the in-container temperature, the more the blowing amount of the blowing device (67) is lowered.

## Patentansprüche

1. Eine Kühlvorrichtung (1), folgendes umfassend:
einen Vorratsbehälter (2), der eine Öffnung (22a) umfasst;
eine Tür (4), die zum Öffnen und Schließen der Öffnung (22a) konfiguriert ist; und
eine Kühleinheit (6), die ein Inneres des Vorratsbehälters (2) kühlt, wobei
die Kühleinheit (6) umfasst:
einen Kompressor (60);
einen Kondensator (61);
eine Blasvorrichtung (67), die Luft zu dem Kondensator (61) und dem Kompressor (60) sendet; und
ein Rahmenrohr (66), das in der Nähe der Öffnung (22a) angeordnet ist und durch das ein von dem Kompressor (60) abgegebenes Kältemittel strömt, bevor es den Kondensator (61) erreicht,
**dadurch gekennzeichnet, dass**
in einem Zustand, in dem weder ein Start noch ein Stopp des Kompressors (60) durchgeführt wird, eine Blasmenge der Blasvorrichtung (67) für eine Periode, in der eine Behälterinnentemperatur, die eine Temperatur innerhalb des Vorratsbehälter (2) ist, einen vorbestimmten oberen Grenzwert überschreitet, erhöht wird, und die Blasmenge der Blasvorrichtung (67) für eine Periode, in der die Behälterinnentemperatur unter einen vorbestimmten unteren Grenzwert fällt, reduziert wird.

2. Kühlvorrichtung (1) nach Anspruch 1, wobei
eine Leistung des Kompressors (60) auf eine konstante Leistung eingestellt wird, und
je niedriger die Behälterinnentemperatur ist, desto mehr wird die Blasmenge der Blasvorrichtung (67) verringert.

## Revendications

1. Appareil de refroidissement (1) comprenant :
un contenant de stockage (2) comprenant une ouverture (22a), et
une porte (4) configurée pour ouvrir et fermer l'ouverture (22a), et
une unité de refroidissement (6) qui refroidit l'intérieur du contenant de stockage (2), où
l'unité de refroidissement (6) comprend :
un compresseur (60),
un condenseur (61),
un dispositif soufflant (67) qui envoie de l'air au condenseur (61) et au compresseur (60), et
un tuyau de cadre (66) qui est disposé au voisinage de l'ouverture (22a) et au travers duquel circule un réfrigérant éjecté du compresseur (60) avant d'atteindre le condenseur (61), **caractérisé en ce que** :
lorsqu'il n'est effectué ni le démarrage ni l'arrêt du compresseur (60), la quantité propulsée du dispositif soufflant (67) est augmentée pendant un intervalle de temps dans lequel la température à l'intérieur du contenant, qui représente la température à l'intérieur du contenant de stockage (2), dépasse une valeur limite supérieure prédéterminée, et la quantité propulsée du dispositif soufflant (67) est réduite pendant un intervalle de temps dans lequel la température à l'intérieur du contenant descend en dessous d'une valeur limite inférieure prédéterminée.

2. Appareil de refroidissement (1) selon la revendication 1, dans lequel :
la sortie du compresseur (60) est réglée pour délivrer une sortie constante, et
plus la température à l'intérieur du contenant est basse, plus la quantité propulsée du dispositif soufflant (67) est diminuée.
